# EUROPÄISCHE PATENTSCHRIFT

(11) **EP 0 908 634 B1**
(45) Veröffentlichungstag und Bekanntmachung des Hinweises auf die Patenterteilung: **19.06.2002**
(21) Anmeldenummer: 98810803.1
(22) Anmeldetag: 19.08.1998
(51) Int. Cl.: F16B 13/08

(54) **Einschlagdübel**
Drive in dowel sleeve
Cheville à enfoncer

(30) Priorität: 10.10.1997 DE 19744728
(43) Veröffentlichungstag der Anmeldung: 14.04.1999
(73) Patentinhaber: HILTI Aktiengesellschaft, 9494 Schaan (LI)
(72) Erfinder: Wisser, Erich, 6900 Bregenz (AT); Hartmann, Markus, 6820 Frastenz (AT); Keller, Kai-Uwe, 6800 Feldkirch-Tisis (AT); Werner, Michael, 81245 München (AT); Kang, Gin-Won, 9465 Salez (AT)
(74) Vertreter: Wildi, Roland

(56) Entgegenhaltungen:
- DE-A- 3 536 518
- DE-C- 4 333 471

## Beschreibung

Die Erfindung betrifft einen Einschlagdübel gemäss dem Oberbegriff des Patentanspruchs 1.

Die Verankerung der bekannten Einschlagdübel beruht meist auf dem Spreizprinzip. Die dafür eingesetzten Schlagspreizdübel sind meist zweiteilig aufgebaut und umfassen einen hülsenförmigen Dübelkörper mit einer konischen Bohrung und ein Spreizelement. Zur Verankerung in einem vorbereiteten Bohrloch wird das Spreizelement durch Hammerschläge in den Spreizbereich des hülsenförmigen Dübelkörpers eingetrieben. Dadurch wird der Speizbereich radial aufgeweitet und kraftschlüssig gegen die Wandung des Bohrloches gepresst. Die Mehrteiligkeit dieser bekannten Schlagspreizdübel kann zu Problemen führen. Beispielsweise kann das Spreizelement falsch in die Bohrung des Dübelkörpers eingesetzt werden. Auch kann das Spreizelement aus der Bohrung herausfallen und verloren gehen. Bei Varianten mit ausserhalb der Bohrung angeordnetem und gehaltenem Spreizelement kann es vorkommen, dass sich das Spreizelement beim Überschlagen des Dübelkörpers schräg stellt und verkantet. Für die Erzielung der gewünschten Haltewerte sind hohe Spreizkräfte erforderlich. Um trotz der benötigten Spreizkräfte die Eintreibkraft klein zu halten, besitzen die konischen Spreizelemente möglichst kleine Konuswinkel. Dafür müssen die Spreizelemente aber eine relativ grosse Länge aufweisen. Dies führt dazu, dass das Spreizelement etwa die Hälfte der Längserstreckung des Dübelkörpers einnimmt. Für das Innengewinde bleibt daher nur eine geringe Länge des Dübelkörpers übrig. Daher kann eine in das Innengewinde eingeschraubte Ankerstange nur in sehr begrenztem Umfang nachjustiert werden. Wegen der relativ geringen Einschraubtiefe der Ankerstange in den Dübelkörper kann es dann bei hoher Querbelastung zu einem Brechen des Dübelkörpers kommen.

Die Verankerung nach dem Spreizprinzip erfordert hohe Spreizkräfte. Dies führt zu grossen Achs- und Randabständen für die erstellten Befestigungspunkte. Da diese Abstände nicht immer eingehalten werden können, sind neben den auf dem Spreizprinzip beruhenden Einschlagdübeln auch Systeme bekannt, die im wesentlichen durch eine formschlüssige Verbindung in einem Bohrloch verankert werden. Derartige Systeme beruhen auf einer Hinterschneidung, die üblicherweise im Bereich des Bohrlochgrunds angeordnet ist. Die Verankerung erfolgt über Spreizschenkel, die am hülsenförmigen Dübelkörper vorgesehen sind und radial in die Hinterschneidung ausgestellt werden, um den Formschluss herzustellen.

Aus der DE-A-35 36 518 ist ein Einschlagdübel zur formschlüssigen Verankerung in einem mit einer Hinterschneidung versehenen Bohrloch bekannt. Dieser bekannte Einschlagdübel besteht aus einer sich am Bohrlochgrund abstützenden Innengewindehülse, die an ihrem vorderen Bereich mit Spreizschenkeln ausgestattet ist. Die Spreizschenkel sind gelenkig mit der Hülse verbunden und durch ein Biegegelenk in rückwärtige und vordere Spreizschenkel geteilt. Die vorderen Spreizschenkel verlaufen in einem spitzen Winkel zur Längsachse der Hülse und stützen sich gegenseitig an ihren freien Enden ab. Beim schlagenden Eintreiben der Hülse in die Bohrung knicken die Spreizschenkel am Biegegelenk aus und werden in die Hinterschneidung ausgestellt. Nach dem Ausknicken bilden die vorderen Spreizschenkel einen planen Boden. Dieser bekannte Einschlagdübel ist zum Unterschied von den üblicherweise eingesetzten zweioder mehrteiligen Hinterschnittsystemen einteilig ausgebildet und besteht bloss aus einer Innengewindehülse mit angeformten, ausknickbaren Spreizschenkeln. Der einteilige Einschlagdübel kann jedoch nur in Bohrlöchern verankert werden, bei denen zuvor in einem gesonderten Arbeitsschritt die Hinterschneidung hergestellt worden ist. Dieser Vorgang ist sehr zeitaufwendig und erfordert zudem ein speziell ausgebildetes Hinterschnittwerkzeug, um die Hinterschneidung in der gewünschten Tiefe herstellen zu können. Dabei muss auf den exakten Abstand der Hinterschneidung vom Bohrlochgrund geachtet werden, da sonst die Gefahr besteht, dass die Spreizschenkel nicht oder nur unvollständig ausknicken können.

Aufgabe der vorliegenden Erfindung ist es daher, diesen Nachteilen der Einschlagdübel des Stands der Technik abzuhelfen. Es soll ein Einschlagdübel geschaffen werden, der einteilig aufgebaut ist und nur durch axiale Hammerschläge in einem Bohrloch verankerbar ist. Der Einschlagdübel soll durch Formschluss verankerbar sein und dadurch geringe Achs- und Randabstände erlauben. Dabei soll der Einschlagdübel im Bohrloch formschlüssig verankerbar sein, ohne dass es erforderlich ist, zuvor in einem zusätzlichen Arbeitsschritt mit einem speziellen Hinterschnittwerkzeug eine Hinterschneidung zu erzeugen, die überdies auch noch in exakt definiertem Abstand zum Bohrlochgrund angeordnet sein muss.

Die Lösung dieser Aufgaben besteht in einem Einschlagdübel mit den im kennzeichnenden Abschnitt angeführten Merkmalen. Insbesondere wird durch die Erfindung ein Einschlagdübel geschaffen, der aus einer mit einem Lastangriffsmittel, insbesondere einem Innengewinde, ausgestatteten Hülse besteht, die an ihrem vorderen Abschnitt durch Längsschlitze voneinander getrennte, ausknickbare Spreizschenkel aufweist. An der Aussenfläche eines gelenkartig ausgebildeten Übergangsbereiches von einem rückwärtigen Spreizschenkel zu einem vorderen Spreizschenkel, der mit dem rückwärtigen Spreizschenkel einen Innenwinkel von etwa 100° bis etwa 160° einschliesst und dessen Vorderenden der Längsachse der Hülse näher liegen als der Übergangsbereich, sind meisselartige Schneiden angeordnet, die den grössten Aussendurchmesser der Hülse im wesentlichen nicht überragen.

Indem am Übergangsbereich vom rückwärtigen zum vorderen Spreizschenkel meisselartige Schneiden angeordnet sind, erzeugt sich der Einschlagdübel beim Eintreiben der Hülse in das Bohrloch selbsttätig eine Hinterschneidung. Die meisselartigen Schneiden werden beim Eintreiben der Hülse von den nach aussen ausknickenden Spreizschenkeln gegen die Bohrlochwandung gepresst und bauen bei jedem Hammerschlag Material von der Bohrlochwandung ab. Auf diese Weise hintermeisselt sich der Einschlagdübel selbsttätig eine Hinterschneidung, deren Geometrie an die Form der Spreizschenkel angepasst ist. Der separate Arbeitsgang zur Herstellung der Hinterschneidung entfällt. Es ist auch kein zusätzliches, spezielles Hinterschnittwerkzeug mehr erforderlich. Der Setzvorgang des formschlüssig verankerbaren Einschlagdübels entspricht weitgehend dem der üblicherweise eingesetzten Schlagspreizdübel. Infolge der Einteiligkeit des erfindungsgemässen Einschlagdübels besteht keine Gefahr mehr, einen für das Aufspreizen erforderlichen Dübelbestandteil zu verlieren. Vielmehr ist der Setzvorgang sogar noch vereinfacht, da in den meisten Fällen der üblicherweise für die Verspreizung der bekannten Schlagspreizdübel erforderliche Setzdorn entfallen kann und die Hammerschläge direkt auf das rückwärtige Ende der Hülse abgegeben werden können. Da der Einschlagdübel ohne ein gesondertes, in seiner Bohrung angeordnetes Spreizelement verankerbar ist, steht auch ein wesentlich grösserer Teil seiner Längserstreckung für das Innengewinde zur Verfügung. Dadurch kann eine Ankerstange über eine grössere Länge eingeschraubt werden. Dies vergrössert die Nachjustierbarkeit eines angeschlossenen Bauteils. Durch die grössere zur Verfügung stehende Einschraublänge für eine Ankerstange ist auch die Gefahr eines Versagens der Hülse bei grosser Querbelastung verringert.

Die Schneiden sind von einer in die Aussenfläche des rückwärtigen Spreizschenkels einmündenden Freifläche und einer von der Aussenfläche des vorderen Spreizschenkels abragenden Meisselfläche begrenzt. Dabei schliessen die Flächen miteinander einen Schneidenwinkel von etwa 30° bis etwa 90° ein. Bei den gewählten Schneidenwinkeln ist ein gutes Schneidverhalten der Schneiden gegeben, ohne Gefahr zu laufen, dass die Schneiden unter Zugbeanspruchung des Einschlagdübels einer grösseren Verformung unterliegen.

Indem die Freifläche gegenüber der Längsachse der Hülse um einen Winkel von etwa 140° bis etwa 175° geneigt verläuft, werden die axialen Hammerschläge optimal in die Bohrlochwandung eingeleitet. Vorzugsweise steht die Freifläche senkrecht zur Längserstreckung der vorderen Spreizschenkel. Dabei erfolgt der Hintermeisselungsvorgang besonders effektiv. Gleichzeitig wird durch die gewählten Neigungswinkel ein Verklemmen der Schneiden im Untergrund verhindert.

Die Schneiden können von einzelnen Vorsprüngen gebildet sein. Vorzugsweise erstrecken sie sich radial über die gesamte Breite der Spreizschenkel und sind dem Vorderende der Hülse näher angeordnet als das am Übergangsbereich der beiden Spreizschenkel ausgebildete Biegegelenk. Indem sich die Schneiden über die Breite der Spreizschenkel erstrecken, erfolgt auch die meisselnde Bearbeitung der Bohrlochwandung über die gesamte Breite der Spreizschenkel. Zwar wird die Bohrlochwandung im Bereich der zwischen den Spreizschenkeln vorgesehenen Längsschlitze nicht unmittelbar von den Schneiden bearbeitet. Infolge des Chipping-Effektes wird jedoch auch dort das Material weggemeisselt.

Der rückwärtige Spreizschenkel weist eine Länge auf, die etwa 50% bis etwa 170% des Abstandes vom Biegegelenk zum Vorderende der Hülse beträgt. Die Länge des vorderen Spreizschenkels beträgt dabei höchstens das 1,5-fache der Differenz des Aussendurchmessers des Dübels am Biegegelenk und des Aussendurchmessers des Dübels am vorderen Ende der Spreizschenkel. Infolge der gewählten geometrischen Verhältnisse schliesst der vordere Spreizschenkel im Ausgangszustand, vor dem Einschlagen, mit der Bohrlochwandung einen Winkel ≥20° ein. Nach dem Einschlagen ist dieser Winkel bei ausgeknickten Spreizschenkeln größer. Dadurch ist sichergestellt, dass es bei Zugbelastung des verankerten Einschlagdübels zu keiner Rückverformung der ausgeknickten Spreizschenkel kommen kann. Die Wahl der Längen des rückwärtigen und des vorderen Spreizschenkels erfolgt nach der Vorgabe, dass der rückwärtige Spreizschenkel nach dem Einschlagen mindestens 15° zur Bohrlochwand geneigt ist, damit der Schlupf bei Zugbeanspruchung des Dübels vernachlässigbar bleibt. Dabei soll der rückwärtige Spreizlappen nach dem Einschlagen höchstens 60° zur Bohrlochwandung geneigt sein, damit er gemäss Fachwerktheorie bei Belastung des Dübels vornehmlich auf Zug beansprucht wird.

Die relative Lage der Spreizschenkel zueinander wird exakt festgelegt, indem die sich vom Biegegelenk zum Vorderende der Hülse erstreckenden vorderen Spreizschenkel an ihren vorderen Endabschnitten über einen ringförmigen Stützabschnitt miteinander verbunden sind. Der Anbindungsbereich des Stützabschnittes ist gelenkartig ausgebildet und ermöglicht das Ausknicken der vorderen Spreizschenkel. Dabei weist der Stützabschnitt im Anbindungsbereich einen Aussendurchmesser auf, der kleiner ist als der über die Schneiden gemessene Aussendurchmesser. Infolge der geometrischen Verhältnisse ist auch bei beidseitig in ringförmiges Vollmaterial eingespannten Spreizschenkeln das Ausknicken beim Eintreiben der Hülse zuverlässig gewährleistet.

Der ringförmige Stützabschnitt ist mit Vorteil zylindrisch ausgebildet und weist eine axiale Länge auf, die etwa das 2-fache bis 5-fache der Wandstärke der Hülse beträgt. Bei der gewählten Länge bleibt unterhalb der meisselartigen Schneiden genügend Freiraum zur Aufnahme des abgetragenen Materials erhalten. Infolge der geometrischen Verhältnisse ist auch sichergestellt, dass die Orientierung der meisselartigen Schneiden zur Bohrlochwandung im optimalen Bereich hinsichtlich des Abbauverhaltens bleibt. Durch die doppelt gelenkige Anbindung der vorderen Spreizschenkel und die gewählte Länge ist noch besser gewährleistet, dass die vorderen Spreizschenkel im vollständig ausgeknickten Zustand mit der Bohrlochwandung einen Winkel einschliessen, der ≥ 90° ist.

Die Wandstärke der Hülse beträgt etwa etwa 15% bis etwa 25% ihres Aussendurchmessers. Zweckmässigerweise ist der Aussendurchmesser der Hülse um etwa 2 mm bis etwa 4 mm grösser als der Nenndurchmesser einer nach dem Verankern einzuschraubenden Schraube oder Gewindestange. Damit ist auch eine Durchsteckmontage möglich. Bei einer Reduktion der Wandstärke ausserhalb des Gewindebereiches ist darauf zu achten, dass trotz Schlitzen und dergleichen mindestens ein dem Spannungsquerschnitt des Gewindebereiches entsprechender Nettoquerschnitt vorhanden bleibt. Dabei ist die Wandstärke im Bereich des gelenkartigen Übergangsbereichs der beiden Spreizschenkel und ggf. im Anbindungsbereich des Stützabschnitts auf etwa 25% bis 75% der Wandstärke der übrigen Hülse reduziert. Dadurch können die für die Verformung in den Biegegelenken und den gelenkigen Anbindungsbereichen erforderlichen Kräfte verhältnismässig klein gehalten werden.

Eine besonders gute Anpassung der radial umlaufenden Stützfläche der meisselnd hergestellten Hinterschneidung und der rückwärtigen Spreizschenkel ergibt sich, wenn die Aussenfläche der rückwärtigen Spreizschenkel sattelflächenförmig ausgebildet ist.

Zur Verbesserung der Abbaueigenschaften der Schneiden erweist es sich von Vorteil, wenn sie eine grössere Härte aufweisen als das Hülsenmaterial. Dabei ist es aus fertigungstechnischen Gründen vorteilhaft, wenn die Schneiden integral mit der Hülse ausgebildet sind. In diesem Fall sind die integralen Schneiden beispielsweise durch Wärmebehandlung oberflächengehärtet oder auch mit Hartstoffteilchen beschichtet.

Im folgenden wird die Erfindung anhand von in den Figuren schematisch dargestellten Ausführungsbeispielen näher erläutert. Es zeigen:
- Fig. 1: ein erstes Ausführungsbeispiel des Einschlagdübels im teilweisen Axialschnitt;
- Fig. 2: den Einschlagdübel aus Fig. 1 mit ausgeknickten Spreizschenkeln;
- Fig. 3 und 4: zwei Diagramme zur Erläuterung der geometrischen Verhältnisse der Speizschenkel und der Schneiden;
- Fig. 5: ein zweites Ausführungsbeispiel des Einschlagdübels im Ausgangszustand; und
- Fig. 6: den Einschlagdübel aus Fig. 5 mit ausgeknickten Spreizschenkeln.

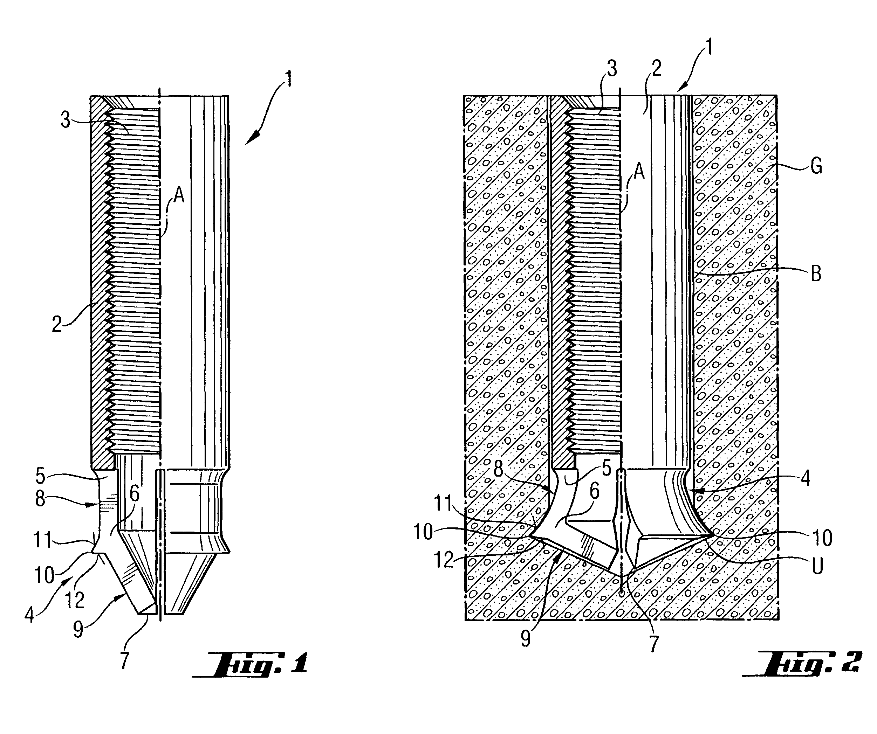

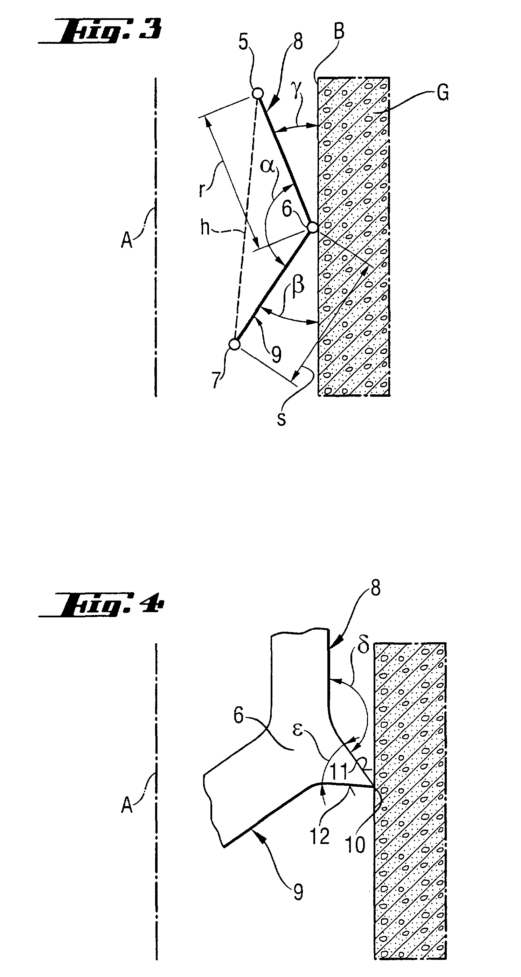

Ein erstes Ausführungsbeispiel des erfindungsgemässen Einschlagdübels ist in Fig. 1 und 2 gesamthaft mit dem Bezugszeichen 1 versehen. Es besteht aus einer mit einem Innengewinde 3 versehenen Metallhülse 2, die an ihrem vorderen Abschnitt 4 Spreizschenkel aufweist, die durch axiale Schlitze voneinander getrennt sind. Die Spreizschenkel sind über einen gelenkigen Übergangsbereich, vorzugsweise ein plastisches Gelenk 5, an die Hülse 2 angebunden und weisen ein Biegegelenk 6 auf, durch das sie jeweils in einen rückwärtigen Spreizschenkel 8 und in einen vorderen Spreizschenkel 9 geteilt sind. Der vordere Speizschenkel 9 verläuft gegenüber dem rückwärtigen Spreizschenkel 8 geneigt. Die Vorderenden 7 des vorderen Spreizschenkels 9 bilden zugleich das Vorderende der Hülse 2 und liegen der Achse A der Hülse 2 näher als das plastische Gelenk 5.

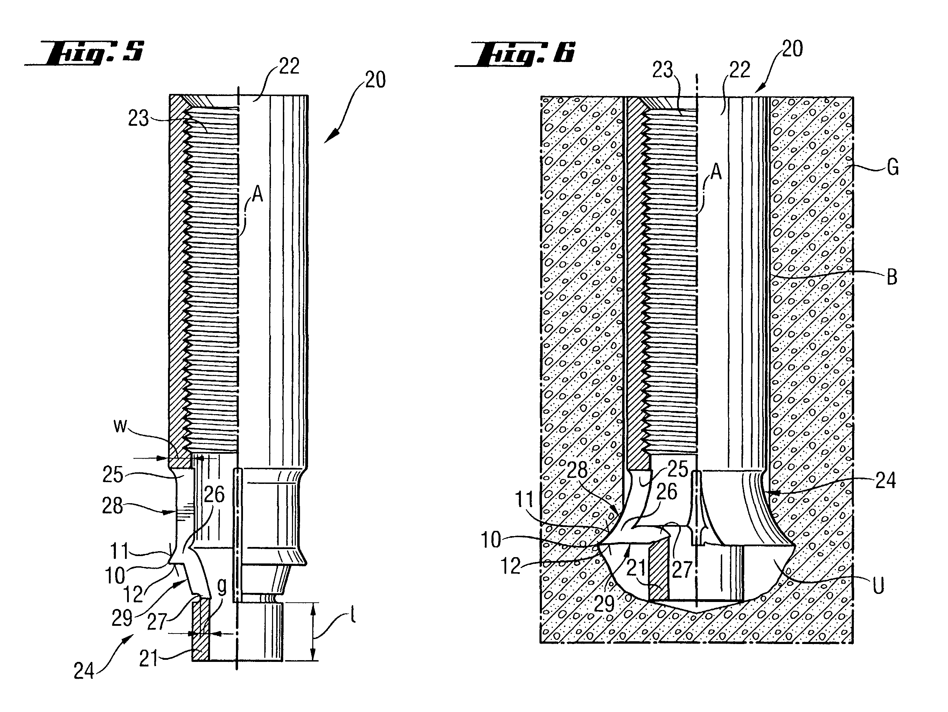

Wie in Fig. 3 angedeutet, schliessen die beiden Spreizschenkel 8, 9 einen Winkel α ein, der etwa 100° bis etwa 160° beträgt. Der Winkel den die Aussenfläche des vorderen Spreizschenkels 9 mit einer parallelen Geraden zur Achse A der Hülse 2 bzw. mit der Wandung eines Bohrlochs einschliesst, wird mit β bezeichnet. Im Ausgangszustand ist der Winkel β vorzugsweise grösser oder gleich 20°. Im Endzustand, mit ausgeknickten Spreizschenkeln 8, 9 wird ein größerer Winkel β angestrebt. Der Winkel, den die Aussenfläche des rückwärtigen Spreizschenkels 8 mit der Wandung des Bohrlochs einschliesst, ist mit γ bezeichnet. Im Ausgangszustand beträgt der Winkel γ etwa 0° bis 20°. Dabei ist die Aussenfläche des rückwärtigen Spreizschenkels 8 vorzugsweise als Sattelfläche ausgebildet. Im Endzustand, bei vollständig ausgeknickten Spreizschenkeln 8, 9 wird ein Winkel γ angestrebt, der grösser oder gleich 15° beträgt, aber 60° nicht überschreitet. Wie aus der schematischen Darstellung in Fig. 3 ersichtlich ist, liegt das Biegegelenk 6 ausserhalb einer gedachten Verbindungsgeraden h, die vom plastischen Gelenk 5 zum Vorderende 7 der Hülse gezogen ist und in Fig. 3 strichliert angedeutet ist. Auch ist aus der Fig. 3 unmittelbar ersichtlich, dass das Vorderende 7 der Hülse der Achse A näher liegt als das plastische Gelenk 5. Der rückwärtige Spreizschenkel 8 weist eine Länge r auf, die etwa 50% bis etwa 170% des Abstandes s des Biegegelenks 6 vom Vorderende 7 der Hülse bzw. der Länge des vorderen Spreizschenkels 9 beträgt. Durch die gewählten Längenverhältnisse und die Neigungswinkel der Spreizschenkel 8, 9 zueinander bzw. zur Achse und/oder zur Wandung eines Bohrlochs ist sichergestellt, dass die Spreizschenkel 8, 9 unter der Einwirkung von axialen Hammerschlägen in Richtung der Bohrlochwandung ausknicken.

Wie aus den schematischen Darstellungen in Fig. 1 und 2 ersichtlich ist, sind am Übergangsbereich vom rückwärtigen Spreizschenkel 8 zum vorderen Spreizschenkel 9 meisselartige Schneiden 10 angeordnet, die radial von der Aussenfläche der Spreizschenkel abragen. Die Schneiden 10 sind von einer Freifläche 11, die in die Aussenfläche des rückwärtigen Spreizschenkels 8 einmündet, und einer Meisselfläche 12 begrenzt, die von der Aussenfläche des vorderen Spreizschenkels 9 abragt. Gemäss Fig. 4 schliessen die Freifläche 11 und die Meisselfläche 12 einen Schneidenwinkel ε ein, der etwa 30° bis etwa 90° beträgt. Dabei ist die Freifläche 11 gegenüber der Achse A der Hülse um einen Winkel δ von etwa 140° bis etwa 175° geneigt. Vorzugsweise verläuft die Freifläche 11 derart geneigt, dass sie senkrecht zur Längserstreckung des vorderen Spreizschenkels 9 steht.

Der erfindungsgemässe Einschlagdübel 1 wird in ein entsprechend seinem Durchmesser erstelltes Bohrloch B im Untergrund G gesteckt, bis sein Vorderende 7 am Bohrlochgrund aufsteht. Der rückwärtige Abschnitt der Hülse 2 ragt noch aus dem Bohrloch B. Die Verankerung des Einschlagdübels 1 erfolgt durch axiale Hammerschläge, die auf das aus dem Bohrloch B ragende Ende der Hülse 2 ausgeübt werden. Infolge der axialen Schläge knicken die Spreizschenkel 8, 9 nach aussen gegen die Wandung des Bohrlochs B. Die Schneiden 10 bearbeiten die Bohrlochwandung meisselnd und erzeugen beim vollständigen Eintreiben der Hülse 2 eine Hinterschneidung U, deren Geometrie der Gestalt der Schneiden und der Aussenfläche des rückwärtigen Spreizschenkels 8 angepasst ist. Zur Unterstützung der meisselnden Bearbeitung des Untergrunds G weisen die Schneiden 10 eine grössere Härte auf als das übrige Hülsenmaterial. Die Härtung der Schneiden 10 erfolgt üblicherweise durch eine geeignete Wärmebehandlung. Die Schneiden 10 können auch mit Hartstoffteilchen beschichtet sein oder zur Gänze aus Hartmetall bestehen und in die Aussenfläche der Spreizschenkel eingesetzt sein. Vorzugsweise sind die Schneiden 10 jedoch integral mit der Hülse 2 ausgebildet.

In Fig. 5 und 6 ist eine Variante des erfindungsgemässen Einschlagdübels dargestellt und gesamthaft mit dem Bezugszeichen 20 versehen. Der Einschlagdübel 20 besteht wiederum aus einer metallischen Innengewindehülse 22. Das Innengewinde ist mit 23 bezeichnet. Wiederum sind am vorderen Abschnitt der Hülse 22 rückwärtige und vordere Spreizschenkel 28, 29 vorgesehen, die durch ein Biegegelenk 26 getrennt sind. Die rückwärtigen Spreizschenkel 28 sind über ein plastisches Gelenk 25 mit der übrigen Hülse 22 verbunden. Im Bereich des Biegegelenks 26 sind meisselartige Schneiden 10 vorgesehen, die den Schneiden des zuvor geschilderten Ausführungsbeispiels entsprechen und daher mit dem gleichen Bezugszeichen versehen sind. Die vorderen Spreizschenkel 29 sind an ihren Vorderenden mit einem ringförmigen Stützabschnitt 21 verbunden. Der Stützabschnitt 21 weist einen Aussendurchmesser auf, der kleiner ist als der über die Schneiden 10 gemessene Aussendurchmesser der Hülse 22. Der ringförmige Stützabschnitt 21 weist eine Länge l auf, die etwa das 2-fache bis 5-fache der Wandstärke w der Hülse 22 beträgt. Im Übergangsbereich von den vorderen Spreizschenkeln 29 zu dem Stützabschnitt 21 ist jeweils ein Gelenk 27 vorgesehen, das ein Ausknicken des vorderen Spreizschenkels 29 erleichtert. Im Gelenkbereich 27 weist die Hülse 22 eine Wandstärke g auf, die auf etwa 25% bis etwa 75% der Wandstärke w der Hülse 22 reduziert ist. Die Wandstärke w der Hülse 22 beträgt dabei etwa 15% bis etwa 25% ihres Aussendurchmessers. Der Stützabschnitt 21 erleichtert das Ausknicken der Spreizschenkel 28, 29 und gewährleistet, dass die vorderen Spreizschenkel 29 im verankerten Zustand des Einschlagdübels 20 gegenüber der Achse der Hülse 22 um wenigstens 90° geneigt sind.

## Patentansprüche

1. Einschlagdübel mit einer ein Lastangriffsmittel, insbesondere ein Innengewinde (3; 23), aufweisenden Hülse (2; 22), die an ihrem vorderen Abschnitt durch Längsschlitze voneinander getrennte, ausknickbare Spreizschenkel aufweist, **dadurch gekennzeichnet, dass** an der Aussenfläche eines gelenkartig ausgebildeten Übergangsbereiches (6; 26) von einem rückwärtigen Spreizschenkel (8; 28) zu einem vorderen Spreizschenkel (9; 29), der mit dem rückwärtigen Spreizschenkel (8; 28) einen Winkel (α) von etwa 100° bis etwa 160° einschliesst und dessen Vorderenden (7) der Längsachse der Hülse (2; 22) näher liegen als der gelenkartige Übergangsbereich (6; 26), meisselartige Schneiden (10) angeordnet sind, die den grössten Aussendurchmesser der Hülse (2; 22) im wesentlichen nicht überragen.

2. Einschlagdübel nach Anspruch 1, **dadurch gekennzeichnet, dass** die Schneiden (10) von einer in die Aussenfläche des rückwärtigen Spreizschenkels (8; 28) einmündenden Freifläche (11) und einer von der Aussenfläche des vorderen Spreizschenkels (9; 29) abragenden Meisselfläche (12) begrenzt sind, wobei die Flächen miteinander einen Schneidenwinkel (ε) von etwa 30° bis etwa 90° einschliessen.

3. Einschlagdübel nach Anspruch 2, **dadurch gekennzeichnet, dass** die Freifläche (11) gegenüber der Längsachse (A) der Hülse (2; 22) um einen Winkel (δ) von etwa 140° bis etwa 175° geneigt verläuft und vorzugsweise senkrecht zur Längserstreckung des vorderen Spreizschenkels (9; 29) angeordnet ist.

4. Einschlagdübel nach einem der vorangehenden Ansprüche, **dadurch gekennzeichnet, dass** die Schneiden (10) sich radial über die gesamte Breite der Spreizschenkel (8, 9; 28, 29) erstrecken und dem Vorderende (7) der Hülse (2; 22) näher angeordnet sind als das am Übergangsbereich der beiden Spreizschenkel (8, 9; 28, 29) ausgebildete Biegegelenk (6; 26).

5. Einschlagdübel nach Anspruch 4, **dadurch gekennzeichnet, dass** der rückwärtige Spreizschenkel (8; 28) eine Länge (r) aufweist, die etwa 50% bis etwa 170% des Abstandes vom Biegegelenk (6; 22) zum Vorderende (7; 27) der Hülse (2; 22) beträgt.

6. Einschlagdübel nach Anspruch 5, **dadurch gekennzeichnet, dass** die sich vom Biegegelenk (26) zum Vorderende der Hülse (22) erstreckenden vorderen Spreizschenkel (29) an ihren vorderen Endabschnitten über einen ringförmigen Stützabschnitt (21) miteinander verbunden sind, wobei im Anbindungsbereich des Stützabschnittes (21) ein Gelenk (27) ausgebildet ist und der Stützabschnitt (21) im Anbindungsbereich einen Aussendurchmesser aufweist, der kleiner ist als der über die Schneiden gemessene Aussendurchmesser.

7. Einschlagdübel nach Anspruch 6, **dadurch gekennzeichnet, dass** der ringförmige Stützabschnitt (21) zylindrisch ausgebildet ist und eine axiale Länge (I) aufweist, die etwa das 2-fache bis 5-fache der Wandstärke (w) der Hülse (22) beträgt.

8. Einschlagdübel nach einem der vorangehenden Ansprüche, **dadurch gekennzeichnet, dass** die Wandstärke (w) der Hülse (2; 22) etwa 15% bis etwa 25% ihres Aussendurchmessers beträgt, wobei die Wandstärke (g) im Bereich des gelenkartigen Übergangsbereichs (6; 26) der beiden Spreizschenkel (8, 9; 28; 29) und ggf. im Anbindungsbereich (27) des Stützabschnitts (21) auf etwa 25% bis 75% der Wandstärke (w) der Hülse (2; 22) reduziert ist.

9. Einschlagdübel nach einem der vorangehenden Ansprüche, **dadurch gekennzeichnet, dass** die Aussenfläche der rückwärtigen Spreizschenkel (8; 28) als Sattelfläche ausgebildet ist.

10. Einschlagdübel nach einem der vorangehenden Ansprüche, **dadurch gekennzeichnet, dass** die Schneiden (10) eine grössere Härte aufweisen als das Hülsenmaterial, wobei die Schneiden (10) vorzugsweise integral mit der Hülse (2; 22) ausgebildet sind.

## Claims

1. A drive-in dowel having a sleeve (2; 22) which has load-application means, particular an internal thread (3; 23), and on its front portion has collapsible expansion members which are separated from one another by longitudinal slots, **characterized in that** chisel-like cutting edges (10) are provided on the outer face of a flexural transitional area (6; 26) from a rear expansion member (8; 28) to a front expansion member (9; 29), said front expansion member (9; 29) forming an angle (α) of approximately 100° to approximately 160° with the rear expansion member (8; 28) and its front ends (7) being located closer to the longitudinal axis of the sleeve (2; 22) than is the flexural transitional area (6; 26), and said chisel-like cutting edges (10) essentially not projecting beyond the largest external diameter of the sleeve (2; 22).

2. A drive-in dowel according to Claim 1, **characterized in that** the cutting edges (10) are limited by a free surface (11) joining the outer surface of the rear expansion member (8; 28) and by a chisel surface (12) projecting from the outer surface of the front expansion member (9; 29), the surfaces together forming a cutting angle (ε) of approximately 30° to approximately 90°.

3. A drive-in dowel according to Claim 2, **characterized in that** the free surface (11) is inclined in relation to the longitudinal axis (A) of the sleeve (2; 22) by an angle (δ) of approximately 140° to approximately 175° and is preferably disposed perpendicular to the longitudinal extension of the front expansion member (9; 29).

4. A drive-in dowel according to one of the preceding claims, **characterized in that** the cutting edges (10) extend radially over the entire width of the expansion members (8, 9; 28, 29) and are disposed closer to the front end (7) of the sleeve (2; 22) than is the flexural joint (6, 26) formed in the transitional area of the two expansion members (8, 9; 28, 29).

5. A drive-in dowel according to Claim 4, **characterized in that** the rear expansion member (8, 28) has a length (r) which amounts to approximately 50% to approximately 170% of the distance from the flexural joint (6; 22) to the front end (7; 27) of the sleeve (2; 22).

6. A drive-in dowel according to Claim 5, **characterized in that** the front expansion members (29) extending from the flexural joint (26) to the front end of the sleeve (22) are joined together at their front end portions by way of an annular supporting portion (21), a joint (27) being formed in the region in which the supporting portion (21) is connected, and the supporting portion (21) having an external diameter in the region of its connection, which is smaller than the external diameter measured over the cutting edges.

7. A drive-in dowel according to Claim 6, **characterized in that** the annular supporting portion (21) is cylindrical in form and has an axial length (1) which amounts to approximately two to five times the wall thickness (w) of the sleeve (22).

8. A drive-in dowel according to one of the preceding claims, **characterized in that** the wall thickness (w) of the sleeve (2; 22) amounts to approximately 15% to approximately 25% of its external diameter, the wall thickness (g) in the region of the flexural transitional area (6; 26) of the two expansion members (8, 9; 28, 29) and possibly in the connecting region (27) of the supporting portion (21) is reduced to approximately 25% to 75% of the wall thickness (w) of the sleeve (2; 22).

9. A drive-in dowel according to one of the preceding claims, **characterized in that** the outer surface of the rear expansion member (8; 28) is formed as a saddle-shaped surface.

10. A drive-in dowel according to one of the preceding claims, **characterized in that** the cutting edges (10) have a greater hardness than the sleeve material, the cutting edges (10) preferably being formed so as to be integral with the sleeve (2; 22).

## Revendications

1. Cheville à enfoncer comprenant un manchon (2 ; 22) qui comporte un moyen d'application de charge, en particulier un taraudage (3 ; 23) et qui, dans sa portion avant, comporte des branches expansibles aptes au flambage séparées les unes des autres par des fentes longitudinales, **caractérisée en ce que** sur la surface extérieure d'une zone de transition de conception articulée (6 ; 26) d'une branche expansible arrière (8 ; 28) à une branche expansible avant (9, 29), qui inclut avec la branche expansible arrière (8 ; 28) un angle (α) d'environ 100° à environ 160° et dont les extrémités avant (7) sont plus proches de l'axe longitudinal du manchon (2 ; 22) que ne l'est la zone de transition articulée (6 ; 26), sont disposés des taillants en forme de burins (10) qui, pour l'essentiel, ne dépassent pas du plus grand diamètre extérieur du manchon (2 ; 22).

2. Cheville à enfoncer selon la revendication 1, **caractérisée en ce que** les taillants (10) sont délimités par une face de dépouille (11) rejoignant la surface extérieure de la branche expansible arrière (8 ; 28) et par une face de burinage (12) qui fait saillie sur la surface extérieure de la branche expansible avant (9 ; 29), les faces incluant entre elles un angle de coupe (ε) d'environ 30° à environ 90°.

3. Cheville à enfoncer selon la revendication 2, **caractérisée en ce que**, par rapport à l'axe longitudinal (A) du manchon (2 ; 22), la face de dépouille (11) s'étend en oblique selon un angle (δ) d'environ 140° à environ 175° et, de préférence, perpendiculairement à l'extension longitudinale de la branche expansible avant (9 ; 29).

4. Cheville à enfoncer selon une des revendications précédentes, **caractérisée en ce que** les taillants (10) s'étendent radialement sur toute la largeur des branches expansibles (8, 9 ; 28, 29) et sont disposés plus près de l'extrémité avant (7) du manchon (2 ; 22) que ne l'est l'articulation de flexion (6 ; 26) agencée dans la zone de transition des deux branches expansibles (8, 9 ; 28, 29).

5. Cheville à enfoncer selon la revendication 4, **caractérisée en ce que** la branche expansible arrière (8 ; 28) présente une longueur (r) qui correspond à environ 50 % à environ 170 % de la distance de l'articulation de flexion (6 ; 22) à l'extrémité avant (7 ; 27) du manchon (2 ; 22).

6. Cheville à enfoncer selon la revendication 5, **caractérisée en ce que** les branches expansibles avant (29) s'étendant de l'articulation de flexion (26) à l'extrémité avant du manchon (22) sont reliées entre elles au niveau de leurs portions extrêmes avant par l'intermédiaire d'une portion annulaire d'appui (21), une articulation (27) étant agencée dans la zone de liaison de la portion d'appui (21) et la portion d'appui (21) présentant, dans la zone de liaison, un diamètre extérieur qui est inférieur au diamètre extérieur mesuré sur les taillants.

7. Cheville à enfoncer selon la revendication 6, **caractérisée en ce que** la portion annulaire d'appui (21) est de forme cylindrique et présente une longueur axiale (1) qui correspond environ à 2 fois à 5 fois l'épaisseur de paroi (w) du manchon (22).

8. Cheville à enfoncer selon une des revendications précédentes, **caractérisée en ce que** l'épaisseur de paroi (w) du manchon (2 ; 22) correspond à environ 15 % à environ 25 % de son diamètre extérieur, l'épaisseur de paroi (g) dans la région de la zone de transition articulée (6 ; 26) des deux branches expansibles (8, 9 ; 28 ; 29) et le cas échéant dans la zone de liaison (27) de la portion d'appui (21) étant réduite à environ 25 % à 75 % de l'épaisseur de paroi (w) du manchon (2 ; 22).

9. Cheville à enfoncer selon une des revendications précédentes, **caractérisée en ce que** la surface extérieure des branches expansibles arrière (8 ; 28) est conçue sous la forme d'une ensellure.

10. Cheville à enfoncer selon une des revendications précédentes, **caractérisée en ce que** les taillants (10) présentent une dureté supérieure à celle de la matière du manchon, les taillants (10) faisant de préférence corps avec le manchon (2 ; 22).
